# EUROPEAN PATENT SPECIFICATION

(11) **EP 0 482 958 B1**
(45) Date of publication and mention of the grant of the patent: **15.01.1997**
(21) Application number: 91309910.7
(22) Date of filing: 25.10.1991
(51) Int. Cl.: H04L 12/40, H04L 12/28

(54) **System for data communication**
System zür Datenübertragung
Système de communication de données

(30) Priority: 25.10.1990 JP 288223/90
(43) Date of publication of application: 29.04.1992
(73) Proprietor: PIONEER ELECTRONIC CORPORATION, Meguro-ku Tokyo-to (JP)
(72) Inventor: Shimotsuma, Hiroshi, c/o Pioneer Electronic Corp., Kawagoe-shi, Saitama-ken (JP); Gou, Yasunao, c/o Pioneer Electronic Corporation, Kawagoe-shi, Saitama-ken (JP); Ikata, Yoshikatsu, c/o Pioneer Electronic Corp., Kawagoe-shi, Saitama-ken (JP); Kimura, Toshiyuki, c/o Pioneer Electronic Corp., Kawagoe-shi, Saitama-ken (JP)
(74) Representative: Brunner, Michael John

(56) References cited:
- EP-A- 0 217 571
- EP-A- 0 315 158
- GB-A- 2 204 755
- ELECTRONICS AND COMMUNICATION ENGINEERING JOURNAL vol. 1, no. 4, July 1989, LONDON GB pages 185 - 192 J.L. RYAN 'HOME AUTOMATION'
- Electro/81 Conference Record, Vol. 6 (1981), New York US, pages 9/1/1-9/1/10; Don Foulkes: "Serial Network simplifies the design of multiple microcomputor systems."

## Description

The present invention relates to a system for data communication, and more particularly to a system for data communication in a network of components of an audiovisual system on an automobile.

### Description of the Prior Art:

In recent years, automobile audio systems have been changing from systems which give a user only audio information such as music to systems which allow the user to enjoy both audio and visual information. Systems with both audio and visual capabilities are known as audiovisual systems.

Automobile audiovisual systems on automobiles are composed of many different audio and visual components. The audio components include a cassette tape deck, a radio tuner, a CD (compact disk) player, etc., while the visual components include a TV (television) tuner, a navigation system, etc.. Audio signals produced by some of these components are amplified by an amplifier and reproduced from loudspeakers in the automobile. Video signals produced by other components are displayed on a display unit in the automobile. Today, the audiovisual system components are controlled according to digital technology, i.e., by respective controllers in the form of microcomputers.

The components of an audiovisual system are required to be controlled systematically for systematic operation of the components. To meet this requirement, the controllers of the respective components are connected by a communication bus network, so that control data for the components will be transmitted through the communication bus.

In the conventional audiovisual system network, the controllers of the components are controlled by a polling process. According to the polling process, either one of the controllers is given a priority status and handled as a master unit, with the other controllers as slave units, and when the master unit is to collect data from a slave unit, the master unit always accesses the slave unit, i.e., initiates the transfer of the data from the slave unit.

When the master unit transmits communication data to a slave unit for access or the slave unit transmits data back to the master unit, it is necessary that the controllers be identified or specified. For this purpose, the controllers are allotted respective addresses indicating themselves.

Heretofore, the controllers are allotted respective unique addresses. Control data which are to be given to controllers comprise address data peculiar to the respective controllers and instruction data (e.g., start command: ON data) added to the address data. The control data which are generated are sent to the communication bus.

It is sometimes necessary for the audiovisual system to control the slave units to effect the same or unified operation in addition to their own modes of operation. For example, the slave units or sources such as the tuner, the cassette tape deck, etc. may be required to effect a muting operation in order to suppress switching noise that would be produced when switching is effected from one of the slave units to another. More specifically, the master unit transmits a mute-mode ON command to each of the slave units to mute all the slave units. When the mute-mode ON command is transmitted to the slave units through the communication bus, it may not be received by a newly connected slave unit or any of the existing slave units for some reason. Should this occur, the slave unit or units that have failed to receive the mute-mode ON command operate differently from the other slave units.

EP-A-0315158 discloses a data communication system with a unified or multi-address command capability.

Electro/81 Conference Record Vol. 6 (1981), New York, pages 9/1/1-9/1/10 discloses a communication system with master and slave units.

It is an object of the present invention to provide a system for data communication, which system can control slave units connected to a communication bus in a unified manner reliably without fail.

According to the present invention, there is provided a system for communicating data in a communication network, the system comprising:
a communication bus for communicating information;
a master unit connected to said communication bus; and
a plurality of slave units connected to said communication bus,
said master unit having means for generating a predetermined unified operation command for said slave units; characterised by
the generating means issuing communication data, the communication data including status information which comprises a plurality of flags, each indicating that one of said unified operation commands has been issued, and transmitting, periodically or continuously, said communication data onto said communication bus, and
each of said slave units being arranged to operate according to the contents of the status information in the transmitted communication data.

The unified operation commanding represent unified command data for a mute mode.

The above and other objects, features and advantages of the present invention will become more apparent from the following description when taken in conjunction with the accompanying drawings in which a preferred embodiments of the present invention is shown example by way of illustrative.

In the drawings:

FIGS. 1A and 1B are diagrams illustrative of the principles of the present invention.

FIG. 2 is a block diagram of a power supply circuit for an audiovisual system.

FIG. 3 is a block diagram of an audiovisual system.

FIG. 4 is a block diagram of a control network of the audiovisual system.

FIG. 5 is a block diagram of a specific arrangement in which a master unit and a slave unit are connected to each other.

FIG. 6 is a block diagram of another specific arrangement in which a master unit and a slave unit are connected to each other.

FIG. 7 is a diagram of a transfer format of communication data.

FIG. 8 is a diagram of major classification data.

FIG. 9 is a diagram of subclassification data.

FIG. 10 is a diagram of basic data formats.

FIG. 11 is a diagram showing physical addresses.

FIG. 12 is a diagram showing physical addresses.

FIG. 13 is a diagram showing logical addresses.

FIG. 14A and 14B are diagrams showing physical status data in detail.

FIG. 15 is a diagram illustrative of an axample in which physical and logical addresases are assigned.

FIG. 16 is a diagram showing a communication process by way of example.

FIG. 17 is a diagram of a master unit and an additional slave unit which is newly connected.

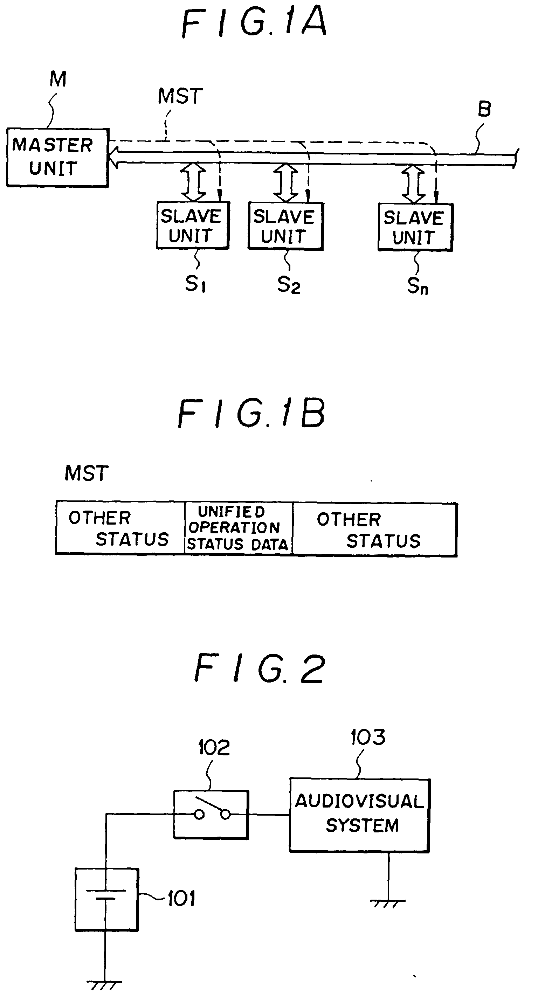

FIGS. 1A and 1B show the principles of the present invention. A master unit M and a plurality of slave units S₁ ∼ Sₙ are connected to a communication bus B. The master unit M always transmits master status information MST to the slave units S₁ ∼ Sₙ, the master status information MST representing a command for a unified operation to be effected by all the slave units S₁ ∼ Sₙ. When the slave units S₁ ∼ Sₙ receive the status information MST, the slave units S₁ ∼ Sₙ effect the operation indicated by the master status information MST.

More specifically, when the master unit M issues a command for a unified operation to the slave units S₁ ∼ Sₙ, the master unit M generates master status information MST representing the contents of the unified operation command. The unified operation command may, for example, be mute-mode ON/OFF command for lowering the level of sounds reproduced by the slave units S₁ ∼ Sₙ. The master status information MST is transmitted to all the slave units S₁ ∼ Sₙ connected to the communication bus B. In response to the master status information MST, the slave units S₁ ∼ Sₙ operate according to the contents of the master status information MST. For example, when the master unit M transmits a mute-mode ON command to all the slave units S₁ ∼ Sₙ, the master status information MST which includes a status flag indicative of a mute-mode ON status is transmitted to the communication bus B at all times. As a result, any slave unit which has previously failed to receive the mute mode ON command or a newly connected slave unit can place itself in a mute mode according to the master status information MST. Consequently, the slave units S₁ ∼ Sₙ operate according to the unified operation command from the master unit M, so that the entire data communication system is able to effect the unified operation.

### POWER SUPPLY OF AUDIOVISUAL SYSTEM

The principles of the present invention are particularly useful when embodied in an audiovisual (AV) system on an automobile. As shown in FIG. 2, the audiovisual system, denoted at 103, is supplied with electric energy from a battery 101 through an ACC switch 102. The ACC switch 102 is assembled together with an engine start keyswitch of the automobile. When the engine key inserted in the engine start keyswitch is turned to the position of the ACC switch, the accessories on the automobile are energized by the battery 101. Therefore, the audiovisual system 103 is turned on or off each time the engine key is turned in the engine start keyswitch.

### ARRANGEMENT OF AUDIOVISUAL SYSTEM

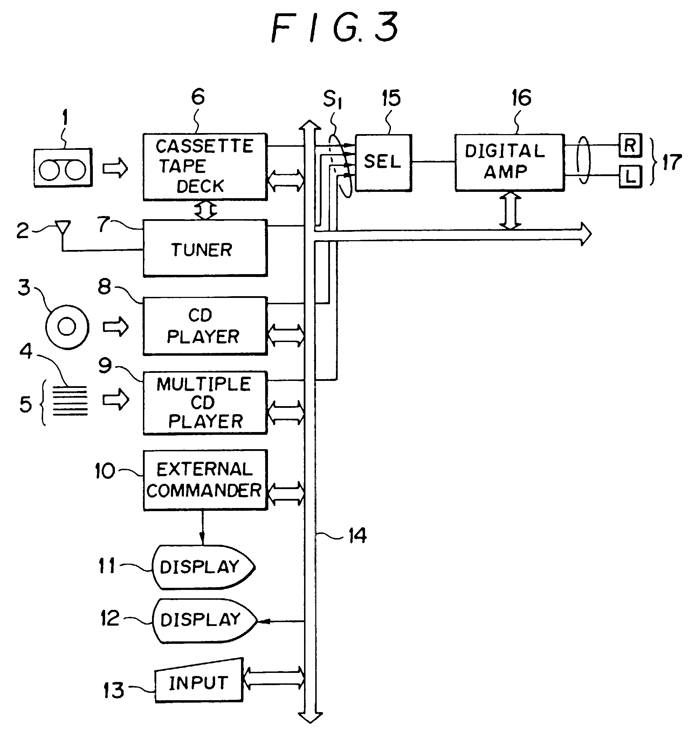

FIG. 3 shows a detailed systematic arrangement of the audiovisual system. The audiovisual system has audio reproducing components and visual reproducing components. The audio reproducing components include a cassette tape deck 6 for reproducing recorded audio signals from a cassette tape 1, a tuner 7 such as an AM/FM tuner for reproducing radio signals which are received by an antenna 2, a CD player 8 for reproducing recorded signals from a CD 3, and a multiple CD player 9 having an automatic CD changer 5 for reproducing recorded signals from multiple CDs 4. The visual reproducing components include a TV tuner contained in the tuner 7, for reproducing TV signals received by the antenna 2, and a display unit 12 for displaying images based on the TV signals and also displaying still images based on signals from the CD player 8 if a CD-ROM is played back by the CD player 8. Typically, a CD-ROM is employed by a navigation system. The audiovisual system has an external commander 10 which is in the form of a keyboard for entering various operaiton commands. A display unit 11 is connected to the external commander 10. The audiovisual system also has an input unit 13, which may be incorporated in the external commander 10.

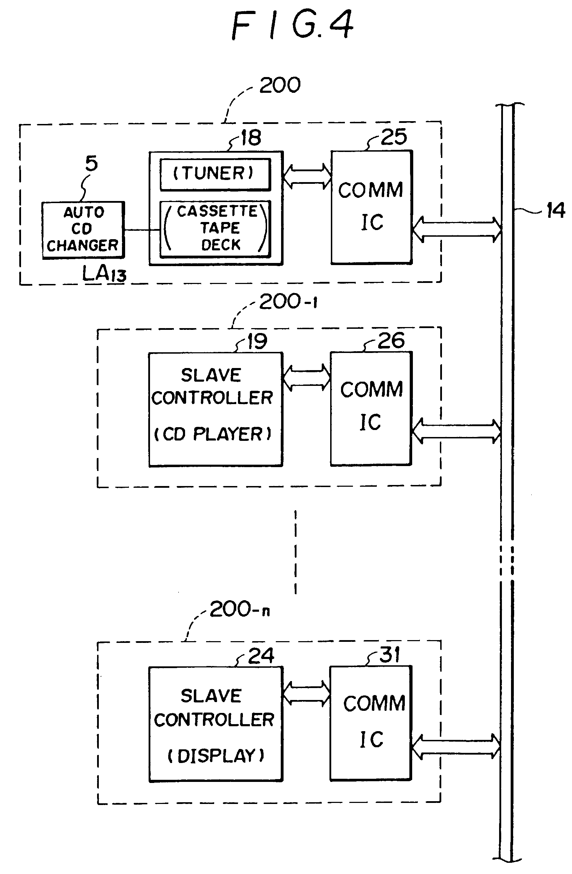

The above components of the audiovisual system have respective controllers for controlling their own operation. These controllers are connected to each other through a communication bus 14, thereby making up a communication bus control network. The control network is shown in FIG. 4, and will be described in detail later on.

Reproduced signals from the audio reproducing components are selectively applied through a selector 15 to a digital amplifier 16. After the reproduced signal has been amplified by the digital amplifier 16, it is applied to loudspeakers 17 from which reproduced sounds are outputted. The digital amplifier 16 contains a digital signal processing circuit which is controlled by a controller in the digital amplifier 16, the controller being connected to the communication bus 14.

### CONTROL NETWORK OF AUDIOVISUAL SYSTEM

FIG. 4 shows the control network in detail. For the purpose of description, the audiovisual system components connected to the communication bus 14 as shown in FIG. 3 will hereinafter be referred to as "units". As shown in FIG. 4, these units are connected to the communication bus 14 parallel to each other. Either one of these units is selected as a "master" unit, indicated by 200, for controlling the control network, while the other units serve as "slave" units, indicated by 200₋₁ ∼ 200₋ₙ.

The master unit 200 has a master controller 18 connected through a communication interface IC 25 to a communication bus 14. The master controller 18 includes controllers for controlling the cassette tape deck 6 and the tuner 7. The controller for the cassette tape back 6 also controls the automatic CD changer 5. The slave units 200₋₁ ∼ 200₋ₙ have respective slave controllers 19 ∼ 24 which are also connected to the communication bus 14 through respective communication interface ICs 26 ∼ 31.

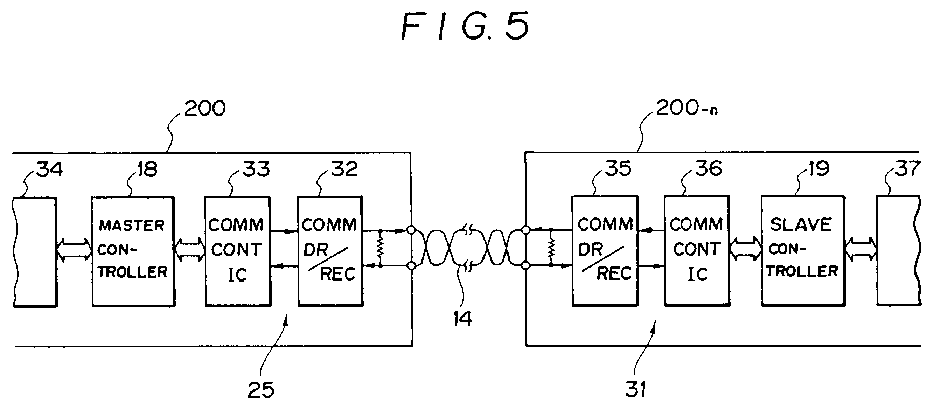

FIG. 5 shows a specific arrangement in which the master unit 200 and the slave unit 200₋ₙ are connected to each other. The master unit 200 and the slave unit 200₋ₙ are connected to each other by the communication bus 14. The communication bus 14 comprises a twisted pair of conductors. Communication data DT transferred through the communication bus 14 is transmitted and received by the communication interface ICs 25, 31 of the master unit 200 and the slave unit 200₋ₙ, respectively. The communication interface IC 25 is divided into a communication driver/receiver 32 and a communication control IC 33. Likewise, the communication interface IC 31 is divided into a communication driver/receiver 35 and a communication control IC 36. Heretofore, the communication driver/receiver and the communication control IC have been integrally combined in one IC. The communication control IC 33 is composed of a CMOS transistor, while the communication driver/receiver 32 is composed of a bipolar transistor of high current-driven capability. The communication driver/receiver 35 and the communication control IC 36 are of the same structures as the communication driver/receiver 32 and the communication control IC 33.

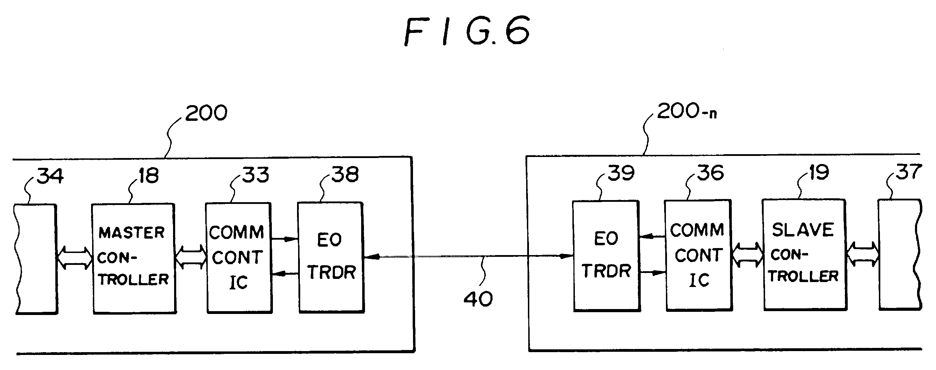

The communication interface IC 25, for example, which is divided into the communication control IC 33 and the communication driver/receiver 32, is capable of coping with different transmission mediums for the communication bus 14. In FIG. 5, the communication bus 14 is composed of a twisted pair of conductors for differential transmission. If the communication bus 14 comprises an optical communication cable 40 as shown in FIG. 6, then the communication driver/receiver 32 shown in FIG. 5 may be replaced with an electro-optical transducer 38 with the communication control IC 33 remaining unchanged. Another advantage is that since the master unit 200 fails due primarily to disturbance noise entering from the communication bus 14, only the communication driver/receiver 32 will malfunction when an excessive signal is applied thereto form the communication bus 14, and replacing the malfuncitoning communication driver/receiver 32 with a new one will restore the master unit 200. Consequently, the maintenance of the master unit 200 and also the slave unit 200₋ₙ is relatively easy to carry out. The easy maintenance is particularly advantageous with audiovisual systems on automobiles because the master and slave units are exposed to noise induced by the automobile engines.

Furthermore, the fabrication of bipolar transistors and CMOS transistors according to different processes is easier and less expensive than the fabrication of Bi-CMOS ICs.

While only the communication interface IC 25 has been described above, each of the communication interfaces 26 ∼ 31 of the other slave units 200₋₁ ∼ 200₋ₙ is also divided into a communication control IC and a communication driver/receiver.

When the master unit 200 transmits a unified operation command (hereinafter referred to as "unified command data") to the slave units 200₋₁ ∼ 200₋ₙ, the master unit 200 generates master status data MST representing the contents of the unified command data, and issues the master status data MST onto the communication bus 14 at all times or periodically. An operation program for generating and issuing the master status data MST is stored in the master controller 18. The master status data MST will be described later on. The slave units 200₋₁ ∼ 200₋ₙ are arranged to operate according to the contents of the master status data MST which has been issued onto the communication bus 14. An operation program for operating the slave units 200₋₁ ∼ 200₋ₙ according to the master status data MST is stored in each of the slave controllers 19 ∼ 24.

### TRANSFER FORMAT OF COMMUNICATION DATA

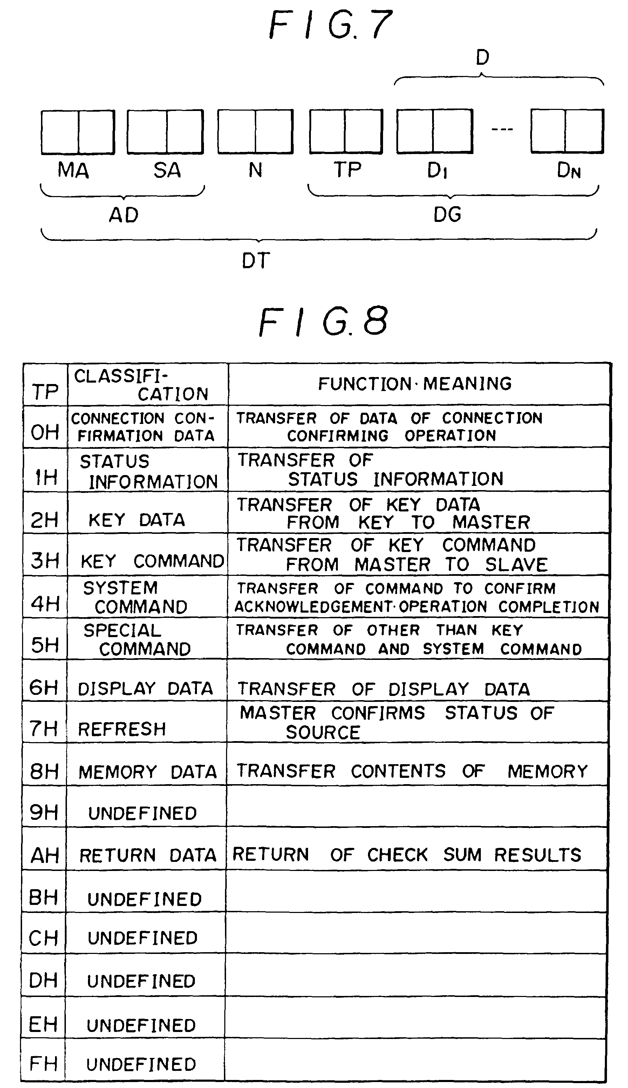

FIG. 7 shows a transfer format of the communication data DT. As shown in FIG. 7, the communication data DT comprises, from its leading end, master address data MA indicating the address of the master unit 200, slave address data SA indicating the addresses of the slave units 200₋₁ ∼ 200₋ₙ, message length data N indicating the message length of data D, classification data TP indicating the type of the data D, and the data D itself which represents the contents to be transferred. The master and slave address data form address data AD and the classification data Tp and the data D form data group DG to be sent.

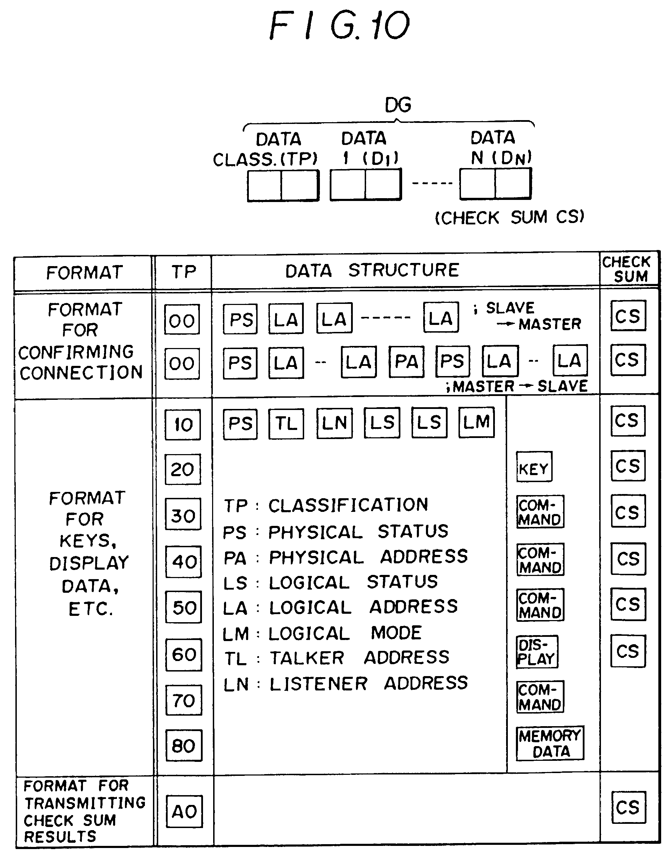

The arrangement of the data D varies depending on the contents of the communication data DT, i.e., the classification data TP. There are roughly three formats for the data D. As shown in FIG. 10, the first format is a format for confirming a connection, the second format is a format for keys and display data, and the third format is a format for transmitting the result of a check sum CS. The format for confirming a connection, which is used when the communicaiton data DT is transferred from the slave units 200₋₁ ∼ 200₋ₙ to the master unit 200, differs from that which is used when the communicaiton data DT is transferred from the master unit 200 to the slave units 200₋₁ ∼ 200₋ₙ. In the format for keys and display data as shown in FIG. 10, data ranging from physical status data PS mentioned after to logical mode data LM are all identical, and omitted from illustration.

Talker address data TL indicates the address of a transmitting side (talker) which transmits the communication data DT.

Listener address data LN indicates the address of a receiving side (listener) which receives the communication data DT.

Logical status data LS represents the status of the function corresponding to each logical address LA.

Logical mode data LM represents the operation status (mode) of the function corresponding to each logical address LA.

The check sum data CS is data for detecting an added error to improve the reliability of the data D.

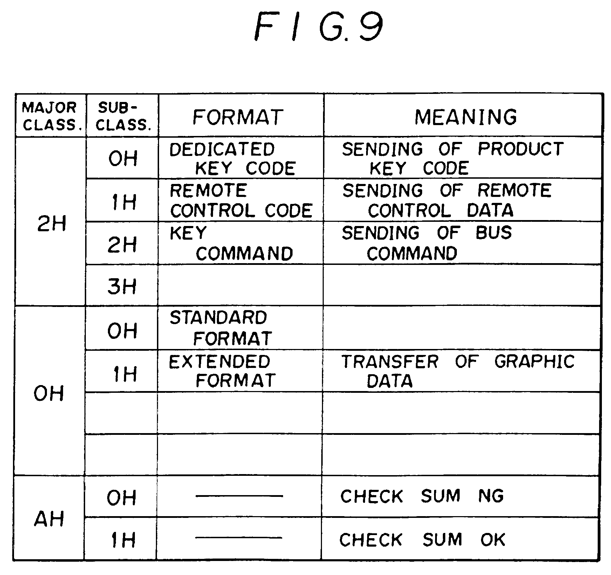

The classification data TP is positioned at the leading end of the communication data DT, and is a data area indicating the type of the data D following the classification data TP. The classification data TP is composed of major classification data TP_{L} and subclassification data TP_{S}. As shown in FIG. 8, the major classification data TP_{L} represents the type of the data D. If the entire classification data TP is of 8 bits, then the major classification data TP_{L} is allotted four high-order bits. As shown in FIG. 9, the subclassification data TP_{S} is mainly used to identify the format of the data D, and is allotted four low-order bits.

Since the classification data TP composed of the main classification and subclassification data TP_{L}, TP_{S} is added, various command data are not mixed in one packet of communication data DT, and one packet of communication data DT may be short and simplified. The communication data DT can thus be systematized, and processed simply by transmitting and receiving units. Shortened packets of communication data are effective to reduce the time in which the communication bus is occupied by the communication data being transmitted, resulting in an increase in the data transfer efficiency Since the major classification and subclassification data are positioned in the leading portion of the communication data DT, the type of the communication data can easily be identified by the receiving unit for easy debugging failure analysis.

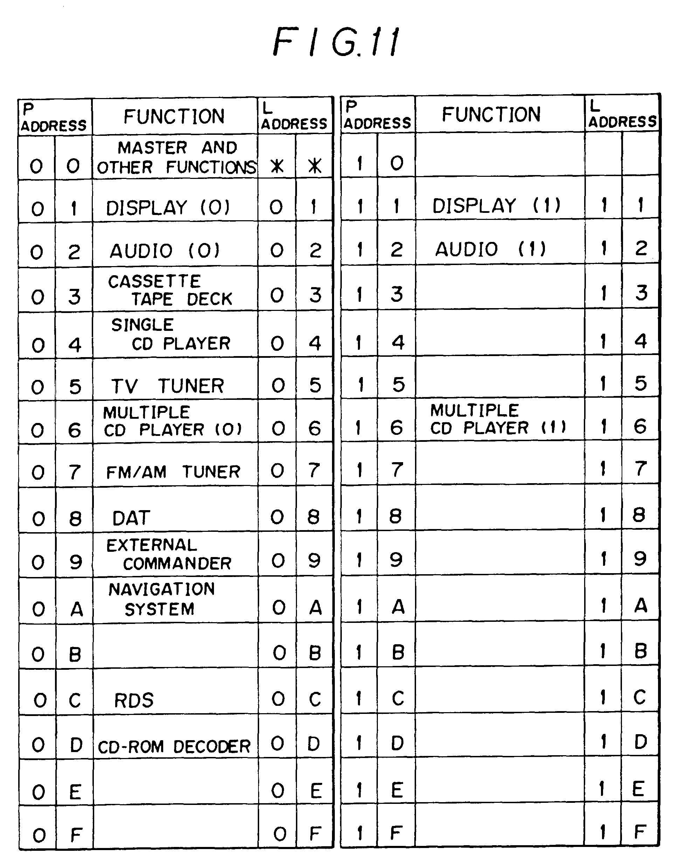

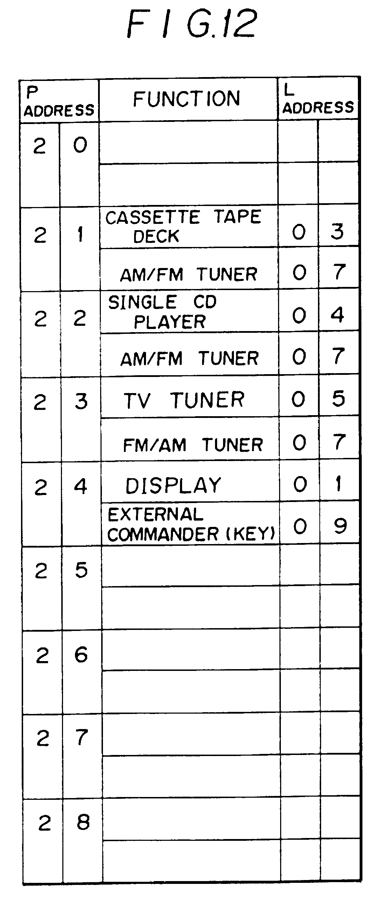

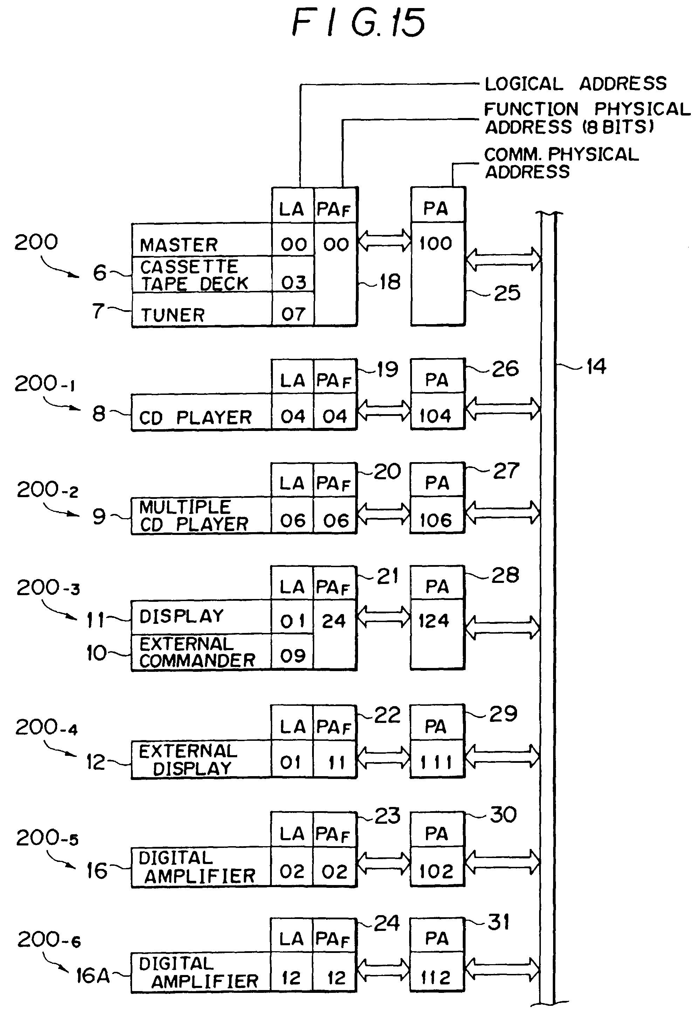

As illustrated in FIGS. 11 and 12, the physical address data PA represents communication addresses for specifying the communication interface ICs 25 ∼ 31 of the master unit 200 and the slave units 200₋₁ ∼ 200₋ₙ on the communicatlon bus 14, that is the addresses indicating the master unit 200 and the slave units 200₋₁ ∼ 200₋ₙ. The physical address data PA for specifying the master unit 200 is fixed at all times. Basically, one unit is allotted one physical address data PA. FIG. 15 shows an example in which the units shown in FIG. 4 are allotted physical address data. In FIG. 15, the physical address data PA are established for the master and slave controllers 18 ∼ 24. This is to take into account the fact that two functional elements, such as the cassette tape deck 6 and the tuner 7, are connected to one master controller 18, as with the master unit 200. If one controller is combined with one function, then the physical address data PA and the logical address data LA indicate the same address, as with the slave controllers 19 ∼ 24.

The physical status data PS represents status information about the master unit 200 and the slave units 200₋₁ ∼ 200₋ₙ, and includes data indicative of the number of function addresses (i.e.,the logical address data LA, described below) that the units have.

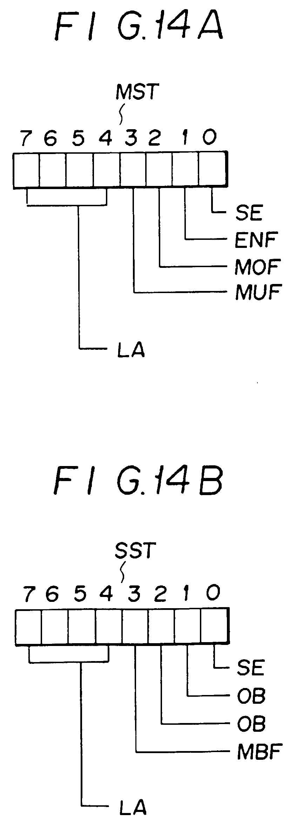

FIGS. 14A and 14B show in detail the formats of the physical status data PS. As shown in FIGS. 14A and 14B, the physical status data PS includes master status data MST issued by the master unit 200 and slave status data SST issued by the slave units 200₋₁ ∼ 200₋ₙ.

As shown in FIG. 14A, the master status data MST has four higher-order bits representing the number of logical addresses LA thereof, and lower-order bits representing a status expansion or extension bit SE, an operation permission flag ENF, a mask-mode ON/OFF flag MOF, and a mute-mode ON/OFF flag MUF. The status expansion bit SE is used when an additional status is present. The operation permission flag ENF is set to "1" when the master unit 200 stops issuing an enable ON command and is operable. The mask-mode ON/OFF flag MOF represents a masking condition with respect to all the slave unit 200₋₁ ∼ 200₋ₙ and is set to "1" when a mask mode is ON. The mask mode is initiated by a mask command which prevents the master unit 200 and the slave units 200₋₁ ∼ 200₋ₙ from detecting ON/OFF statuses of the ACC switch 101. The mute-mode ON/OFF flag MUF is a flag indicating, to all the slave units 200₋₁ ∼ 200₋ₙ, that the entire audiovisual system is mute, and is set to "1" when the mute mode is ON.

As shown in FIG. 14B, the slave status data SST has four higher-order bits representing the number of logical addresses LA, lower-order bits representing a status expansion bit and a mute-function presence/absence flag MBF, and other bits OB. The mute-function presence/absence flag MBF is a flag indicating whether the slave units 200 ₋₁ ∼ 200₋ₙ have a mute function or not. The flag MBF is set to "1" when the slave units 200₋₁ ∼ 200₋ₙ have the mute function. Though not all the slave units 200₋₁ ∼ 200₋ₙ have the mute function, almost all slave units in the form of audio sound systems have the mute function, and the display unit does not have the mute function.

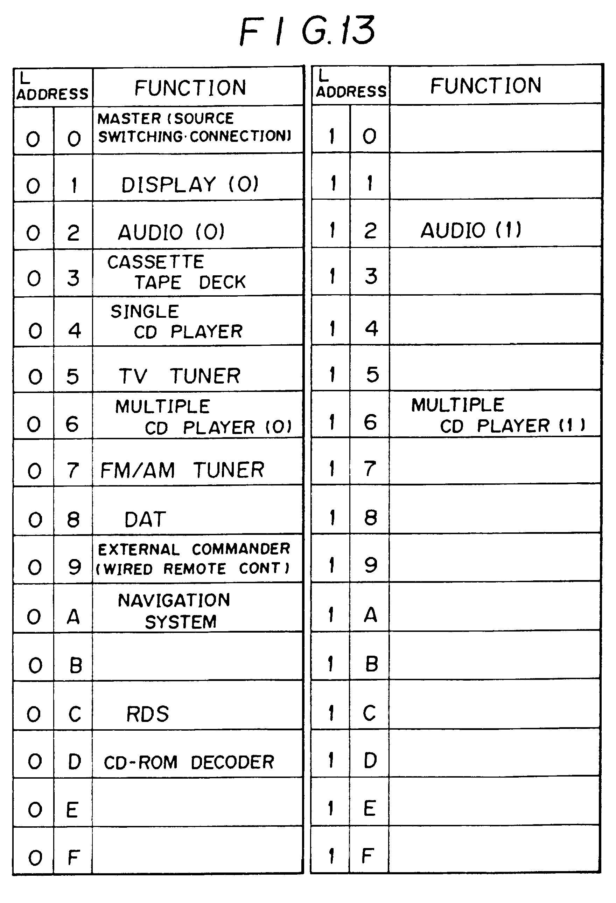

As shown in FIG. 13, the logical address data LA is data indicative of each of the functions (i.e., the tuner and the cassette tape deck) possessed by the master unit 200 and the slave units 200₋₁ ∼ 200₋ₙ. The logical address data LA is assigned to each function. The number of logical address data LA is not fixed because there are as many logical address data LA (e.g., LA₁, LA₂, ...LAₙ) as there are functions possessed by the controller that is determined by the physical address data PA. FIG. 15 also shows the logical address data LA assigned to the units shown in FIG. 4.

That is, the communication ICs 25 ∼ 31 have communication physical addresses PA. Each of the master and slave units 200, 200 ₋₁, ... 200₋₆ has a function physical address PA_{F} and the logical address LA. The master controller 18 includes two controllers for controlling the cassette tape deck 6 and the tuner 7, and, therefore, two logical addresses LA are assigned to those two controllers. Similarly, a controller of the slave unit 200₋₃ includes a display controller and an external commander controller and, therefore, a logical address is assigned to each controller. In case that each of the controllers of slave units as shown in the units 200₋₁, 200₋₂, 200₋₄, 200₋₅, 200₋₆ except the unit 200₋₃, has only one function, the logical address is equal to the function physical address.

### COMMUNICATING OPERATION

Transmission of the communication data DT between the master unit 200 and the slave units 200₁ ∼ 200ₙ of the audiovisual system will be described below.

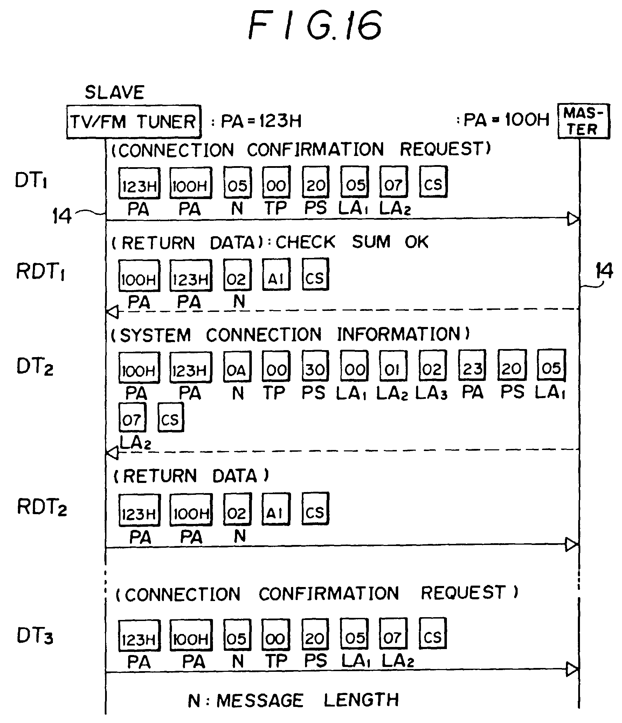

FIG. 16 shows a specific communication process or sequence for confirming a connection when the master unit 200 is accessed by a slave unit including TV and FM/AM tuners to confirm the connection of the slave unit to the audiovisual system.

In this network, the slave units send a self report about themselves to the master unit 200, unlike the conventional polling process. The master unit does not initially positively access the slave units.

First, the slave unit transmits communication data DT₁ for requesting the confirmation of a connection by way of a self report, to the master unit 200 through the communication bus 14. At this time, the communication data DT₁ includes its own physical address data PA indicated by "123H" ("H" means the hexadecimal notation), physical address data PA of the master unit 200, indicated by "100H", logical address data LA₁ = 05 and logical address data LA₂ = 07, which indicate that the slave unit transmitting the communication data includes the TV and FM/AM tuners (see FIG. 13). When the communication data DT₁ is received, the master unit 200 registers, based on the physical address data PA = 123H, the fact that the components with the functions indicated by LA₁ = 05, LA₂ = 07 are connected to the communication bus 14. These components will hereinafter be handled as audiovisual system members. In response to the received communication data DT₁, the master unit 200 transmits return data RDT₁ back to the slave unit, indicating that the master unit 200 has received the communication data DT₁. Then, in order to let the newly connected slave unit know the members or components of the audiovisual system, the master unit 200 transmits system connection information DT₂ to the slave unit. When the system connection information DT₂ is received, the slave unit transmits return data RDT₂ back to the master unit 200 to confirm the reception of the system connection information DT₂. After elapse of a predetermined period of time, the slave unit transmits communication data DT₃ concerning a request for confirming a connection (self report) again to the master unit. The communication data DT₃ is transmitted again because the connection must be confirmed periodically since the audiovisual system on the automobile is turned on and off depending on the ACC switch.

As described above, the communication data DT includes the physical address data PA and the logical address data LA, and the physical address data PA and the logical address data LA are independent of each other. Therefore, any desired combination of physical and logical address data PA, LA may be employed to transmit communication data to any desired unit.

While communication between slave and master units has been described above, it is also possible to transmit communication data between slave units.

As described above, the format of the communication data DT and the allotment of addresses to the units are different between the physical address data PA and the logical address data LA. As a consequence, even if physical address data PA is unknown, a new unit can be connected and can communicate with existing units provided logical address data LA are clearly established.

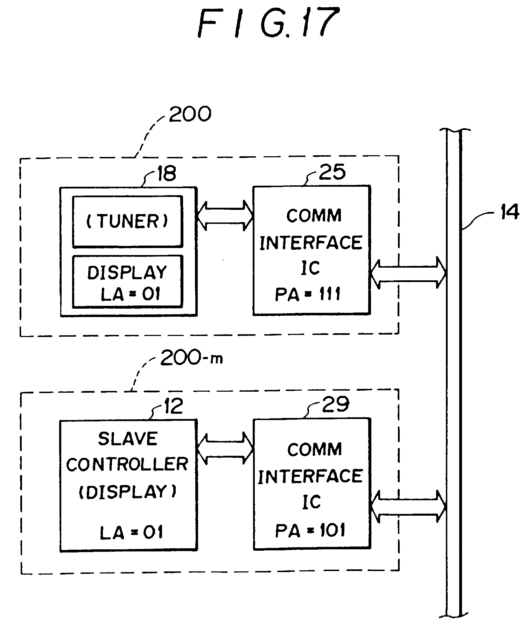

More specifically, as shown in FIG. 17, suppose that a new slave unit 200₋ₘ is connected to the communication bus 14. Even if the physical address data PA of the slave unit 200₋ₘ is "101" which is not established provided the function of the slave unit is a display function, the same function registered in the master unit 200 exists as logical address data LA = 01, and hence the logical address data LA can be accessed. Therefore, it is possible to connect the slave unit 200-m to the master unit 200. The capability of the audiovisual system to expand itself is thus increased.

According to the present invention, as described above, the communication data DT transmitted to the slave units 200₋₁ ∼ 200₋ₙ by the master unit 200 contains the physical status data PS. The slave units 200₋₁ ∼ 200₋ₙ operate according to the contents of the physical status PS in the communication data DT that is received. As a result, if the master unit 200 issues unified command data to turn on the mute mode, for example, to the slave units 200₋₁ ∼ 200₋ₙ, the master unit 200 generates the master status data MST as shown in FIG. 14A, and issues the generated master status data MST onto the communication bus 14. The slave unit which have already received the unified command data to enter the mute mode. A new slave unit which has not been connected to the communication bus 14, or those slave units which have failed to receive the unified command data, do not enter the mute mode. However, since the master unit 200 transmits the physical status data PS at all times (i.e., each time the communication data DT is issued), the new slave unit can quickly enter the mute mode according to the status of the master unit 200 (i.e., the status which the audiovisual system is to take ). Therefore, the audiovisual system enter the unified mode.

Although certain preferred embodiments of the present invention have been shown and described in detail, it should be understood that various changes and modifications may be made therein without departing from the scope of the appended claims.

## Claims

1. A system for communicating data in a communication network, the system comprising:
a communication bus (B, 14) for communicating information;
a master unit (M, 200) connected to said communication bus; and
a plurality of slave units (S1 to Sn, 200-1 to 200-n) connected to said communication bus,
said master unit having generating means (25) for generating a predetermined unified operation command for said slave units; characterised by
the said generating means (25) issuing communication data, the said communication data including status information which comprises a plurality of flags, each flag indicating that one of said unified operation commands has been issued, and transmitting, periodically or continuously, said communication data onto said communication bus, and
each of said slave units being arranged to operate according to the contents of the status information in the transmitted communication data.

2. A system according to claim 1, wherein said unified operation command represents unified command data for a mute mode.

3. A system according to claim 1, the system being installed in an automobile, and wherein said unified operation command represents unified command data for a mask mode in which said master and slave units do not detect the ON/OFF status of an accessory switch (102) of said automobile.

4. A system according to claim 1, the system being installed in an automobile, and wherein said status information includes data representing the number of logical addresses corresponding to the number of functions with which said master unit is provided, data for operation permission indicating whether or not said master unit is operable, data for a mask mode in which said master and slave units do not detect the ON/OFF status of an accessary switch (102) of said automobile, and data for a mute mode in which an entire audiovisual system is mute, said data being sent to each controller (19, 24) of said slave units.

5. A system according to claim 4, wherein said status information includes a status extension bit signifying further data to be transmitted when an additional status is present at the master unit.

6. A system according to claim 4, wherein said controller (19, 24) of each slave unit is adapted to transmit status information, which includes data representing the number of logical addresses corresponding to the number of functions with which said slave unit is provided, and data representing mute function presence/absence indicating whether or not said slave unit has a mute function.

7. A system according to claim 6, wherein said status information transmitted by said controller (19, 24) includes a status extension bit signifying further data to be transmitted by said controller when an additional status is present at the slave unit.

8. A system according to any one of claims 1 to 7, wherein said status information is sent, combined with communication data transmitted between said master unit and slave units, to said slave units (S1 to Sn, 200-1 to 200-n), said communication data including physical address data corresponding to each of said master and slave units and logical address data corresponding to a function with which each unit is provided, said physical and logical address data being independent of each other.

9. A system according to any one of claims 1 to 8, wherein said communication bus comprises a twisted pair of conductors (14).

10. A system according to any one of claims 1 to 9, wherein each of said master and slave units comprises a master controller, a communication interface including a communication control IC (33, 36) and a communication driver/receiver (32, 35) each formed separately from the other.

11. A system according to claim 10, wherein said communication control IC comprises a CMOS transistor and said communication driver/receiver comprises a bipolar transistor of high current drive capability.

12. A system according to any one of claims 1 to 8, wherein communication bus comprises an optical communication cable (40), and each of said master and slave units comprises a master controller and a communication interface including a communication control IC (33, 36) and electro-optical transducer (38, 39) each formed separately from the other.

## Patentansprüche

1. System zum Übertragen von Daten in einem Kommunikationsnetzwerk, wobei das System aufweist:
einen Kommunikationsbus (B, 14) zum Übertragen von Informationen;
eine Mastereinheit (M, 200), die mit dem Kommunikationsbus verbunden ist; und
eine Vielzahl von Hilfseinheiten (S1 bis Sn, 200-1 bis 200-n), die mit dem Kommunikationsbus verbunden sind,
wobei die Mastereinheit eine Erzeugungseinrichtung (25) zum Erzeugen eines vorbestimmten, vereinheitlichen Betriebsbefehls für die Hilfseinheiten besitzt; gekennzeichnet dadurch, daß
die Erzeugungseinrichtung (25) Kommunikationsdaten ausgibt, wobei die Kommunikationsdaten Statusinformationen umfassen, die eine Vielzahl von Zeichen aufweisen, wobei jedes Zeichen anzeigt, daß einer der vereinheitlichen Betriebsbefehle ausgegeben worden ist, und Übertragen, periodisch oder kontinuierlich, der Kommunikationsdaten auf dem Kommunikationsbus, und
wobei jede der Hilfseinheiten so angeordnet ist, um gemäß den Inhalten der Statusinformationen in den übertragenen Kommunikationsdaten zu arbeiten.

2. System nach Anspruch 1, wobei der vereinheitlichte Betriebsbefehl vereinheitlichte Befehlsdaten für einen Stumm-Modus darstellt.

3. System nach Anspruch 1, wobei das System in einem Kraftfahrzeug installiert ist und wobei der vereinheitlichte Betriebsbefehl vereinheitlichte Befehlsdaten für einen Maskierungs-Modus darstellt, in dem die Master- und Hilfseinheiten nicht den EIN/AUS-Status eines Hilfsgerätschalters (102) des Kraftfahrzeugs erfassen.

4. System nach Anspruch 1, wobei das System in einem Kraftsfahrzeug installiert ist und wobei die Statusinformationen Daten, die die Anzahl der logischen Adressen, entsprechend der Anzahl der Funktionen, mit denen die Mastereinheit ausgestattet ist, Daten für eine Betriebserlaubnis, die anzeigen, ob oder ob nicht die Mastereinheit arbeitsfähig ist, Daten für einen Maskierungs-Modus, in dem die Master- und Hilfseinheiten nicht den EIN/AUS-Status eines Hilfsgeräteschalters (102) des Kraftfahrzeugs erfassen, und Daten für einen Stumm-Modus, in dem ein gesamtes audiovisuelles System stumm ist, wobei die Daten zu jeder Steuereinheit (19, 24) der Hilfseinheiten geschickt werden, umfassen.

5. System nach Anspruch 4, wobei die Statusinformationen ein Statusverlängerungs-Bit, das weitere Daten, die übertragen werden sollen, wenn ein zusätzlicher Status an der Mastereinheit vorhanden ist, kennzeichnen.

6. System nach Anspruch 4, wobei die Steuereinheit (19, 24) jeder Hilfseinheit dazu geeignet ist, Statusinformationen zu übertragen, die Daten umfassen, die die Anzahl der logischen Adressen entsprechend der Anzahl der Funktionen darstellen, mit denen die Hilfseinheit ausgestattet ist, und Daten darstellen, die ein Stumm-Funktions-Vorhandensein/Nicht-Vorhandensein anzeigen, ob oder ob nicht die Hilfseinheit eine Stumm-Funktion umfaßt.

7. System nach Anspruch 6, wobei die Statusinformationen, die durch die Steuereinheit (19, 24) übertragen sind, ein Statuserweiterungs-Bit umfassen, das kennzeichnet, daß weitere Daten zu der Steuereinheit übertragen werden sollen, wenn ein zusätzlicher Status an der Hilfseinheit vorhanden ist.

8. System nach einem der Ansprüche 1 bis 7, wobei die Statusinformationen, kombiniert mit Kommunikationsdaten, die zwischen der Mastereinheit und den Hilfseinheiten übertragen werden, zu den Hilfseinheiten (S1 bis Sn, 200-1 bis 200-n) geschickt werden, wobei die Kommunikationsdaten physikalische Adressdaten entsprechend jeder der Master- und Hilfseinheiten und logische Adressdaten entsprechend einer Funktion, mit der jede Einheit ausgestattet ist, umfassen, wobei die physikalischen und logischen Adressdaten unabhängig voneinander sind.

9. System gemäß einem der Ansprüche 1 bis 8, wobei der Kommunikationsbus ein verdrilltes Paar Leiter (14) besitzt.

10. System nach einem der Ansprüche 1 bis 9, wobei jede der Master- und Hilfseinheiten eine Mastersteuereinheit, ein Kommunikations-lnterface, das ein Kommunikationssteuer-IC (33, 36) und einen Kommunikationstreiber/Empfänger (32, 35) umfaßt, wobei jedes separat voneinander gebildet ist, aufweist.

11. System nach Anspruch 10, wobei das Kommunikationssteuer-lC einen CMOS-Transistor aufweist, und der Kommunkationstreiber/Empfänger einen bipolaren Transistor mit einer hohen Stromtreiberfähigkeit aufweist.

12. System nach einem der Ansprüche 1 bis 8, wobei der Kommunikationsbus ein optisches Kommunikationskabel (40) aufweist und jede der Master- und Hilfseinheiten eine Mastersteuereinheit und ein Kommunikations-lnterface, das ein Kommunikationssteuer-lC (33, 36) und einen elektro-optischen Transducer (38, 39) umfaßt, von denen jeder separat zu dem anderen gebildet ist, aufweist.

## Revendications

1. Système pour transmettre des données dans un réseau de communications, le système comprenant:
- un bus de transmission (B, 14) pour transmettre des informations;
- une unité maîtresse (M, 200) connectée audit bus de transmission; et
- une pluralité d'unités esclaves S1 à Ns, 200-1 à 200-n) connectées audit bus de transmission,
ladite unité maîtresse ayant des moyens générateurs (25) pour produire une commande d'opération unifiée prédéterminée pour lesdites unités esclaves,
caractérisé en ce que:
- lesdits moyens générateurs (25) émettent des données de communications, lesdites données de communications incluant des informations d'état qui comprennent une pluralité de drapeaux, chaque drapeau indiquant qu'une desdites commandes d'opération unifiée a été émise, et émettant, périodiquement ou de manière continue, lesdites données de communications sur ledit bus de transmission; et
- chacune desdites unités esclaves étant agencée pour fonctionner selon le contenu des informations d'état comprises dans les données de communications émises.

2. Système selon la revendication 1, dans lequel ladite commande d'opération unifiée représente des données de commande unifiée pour un mode de blocage audio.

3. Système selon la revendication 1, le système étant monté dans une automobile, et dans lequel ladite commande d'opération unifiée représente des données de commande unifiée pour un mode de masquage dans lequel lesdites unités maîtresse et esclaves ne détectent pas l'état fermé ou ouvert d'un interrupteur d'accessoires (102) de ladite automobile.

4. Système selon la revendication 1, le système étant installé dans une automobile, dans lequel lesdites informations d'état incluent des données représentant le nombre d'adresses logiques correspondant au nombre de fonctions dont ladite unité maîtresse est pourvue, des données pour une autorisation d'opération indiquant si ladite unité maîtresse peut être utilisée, des données pour un mode de masquage, dans lequel lesdites unités maîtresse et esclaves ne détectent pas l'état fermé ou ouvert d'un interrupteur d'accessoires (102) de ladite automobile, et des données pour un mode de blocage audio, dans lequel le système audiovisuel complet a sa sortie audio bloquée, lesdites données étant envoyées à chaque régisseur (19, 24) desdites unités esclaves.

5. Système selon la revendication 4, dans lequel lesdites informations d'état incluent un binaire d'extension d'état signifiant des données supplémentaires à transmettre lorsqu'un état supplémentaire est présent dans l'unité maîtresse.

6. Système selon la revendication 4, dans lequel ledit régisseur (19, 24) de chaque unité esclave est adapté pour émettre des informations d'état qui comprennent des données représentant le nombre d'adresses logiques corresponddant au nombre de fonctions dont ladite unité esclave est pourvue, et des données représentant la présence ou l'absence d'une fonction de blocage audio indiquant si ladite unité esclave a une fonction de blocage audio ou non.

7. Système selon la revendication 6, dans lequel lesdites informations d'état émises par ledit régisseur (19, 24) incluent un binaire d'extension d'état signifiant des données supplémentaires à émettre par ledit régisseur quand un état supplémentaire est présent dans l'unité esclave.

8. Système selon l'une quelconque des revendications 1 à 7, dans lequel lesdites informations d'état sont envoyées, combinées avec les données de communications transmises entre lesdites unité maîtresse et unités esclaves auxdites unités esclaves (S1 à Ns, 200-1 à 200-n), lesdites données de communications incluant des données d'adresses physiques correspondant à chacune desdites unités maîtresse et esclaves, et des données d'adresses logiques correspondant à une fonction dont chaque unité est pourvue, lesdites données d'adresses physiques et logiques étant indépendantes les unes des autres.

9. Système selon l'une quelconque des revendications 1 à 8, dans lequel ledit bus de transmission comprend une paire torsadée de conducteurs (14).

10. Système selon l'une quelconque des revendications 1 à 9, dans lequel chacune desdites unités maîtresse et esclaves comprend un régisseur maître, une interface de communications comprenant un circuit intégré de commande de transmission (33, 36) et un circuit d'attaque et récepteur de communications (32, 35) formés chacun séparément de l'autre.

11. Système selon la revendication 10, dans lequel ledit circuit intégré de commande de transmission comprend un transistor CMOS, et ledit circuit d'attaque et récepteur de communications comprend un transistor bipolaire pouvant débiter un fort courant.

12. Système selon l'une quelconque des revendications 1 à 8, dans lequel le bus de transmission comprend un câble de transmission optique (40) et chacune desdites unités maîtresse et esclaves comprend un régisseur maître et une interface de communications comprenant un circuit intégré de commande de transmission (33, 36) et un transducteur électro-optique (38, 39) formés chacun séparément de l'autre.
